# EUROPEAN PATENT SPECIFICATION

(11) **EP 3 040 386 B1**
(45) Date of publication and mention of the grant of the patent: **22.08.2018**
(21) Application number: 14840030.2
(22) Date of filing: 25.08.2014
(51) Int. Cl.: C09D 175/04

(54) **WATER-BASED COATING AGENT FOR GRAVURE PRINTING AND GAS BARRIER FILM**
WASSERBASIERTES BESCHICHTUNGSMITTEL FÜR TIEFDRUCK UND GASSPERRSCHICHT
AGENT DE REVÊTEMENT À BASE D'EAU POUR L'HÉLIOGRAVURE ET FILM BARRIÈRE AUX GAZ

(30) Priority: 28.08.2013 JP 2013177228
(43) Date of publication of application: 06.07.2016
(73) Proprietor: Toppan Printing Co., Ltd., Tokyo 110-0016 (JP)
(72) Inventor: KAMINAGA Junichi, Tokyo 110-0016 (JP); HOSHI Sayaka, Tokyo 110-0016 (JP); OMURA Yuki, Tokyo 110-0016 (JP)
(74) Representative: TBK
(86) International application number: PCT/JP2014/072174
(87) International publication number: WO 2015/029950

(56) References cited:
- JP-A- H09 151 265
- JP-A- 2001 287 294
- JP-A- 2005 138 581
- JP-A- 2005 139 435
- JP-A- 2005 139 436

## Description

### TECHNICAL FIELD

The present invention relates to a water-based coating agent for gravure printing and a gas barrier film which are used in a packaging material of food which does not like moisture or oxygen such as dried foods, confectionery, bread, and delicacies, and medicine such as a disposable body warmer, a tablet, powder medicine, a poultice, or a patch and is preferably used for forming a gas barrier coating film by gravure printing. Further, specifically, the present invention relates to a water-based coating agent for gravure printing and a gas barrier film which are used in the packaging field requiring high gas barrier properties and transparency in which the contents are able to be recognized.

Priority is claimed on Japanese Patent Application No. 2013-177228, filed August 28, 2013.

### BACKGROUND ART

In order to limit deterioration or spoilage or the like of the contents and to retain functions or properties of the contents, properties (gas barrier properties) of a blocking approach of gas transmuting water vapor, oxygen, and other contents are necessary in a packaging material used in packaging of food, medicine, and the like.

For this reason, in the related art, a gas barrier layer formed of a material having gas barrier properties was disposed on the packaging material. So far, the gas barrier layer has been disposed on a base such as a film or paper by a sputtering method, a vapor deposition method, a wet coating method, a printing method, and the like. In addition, a metal foil or a metal vapor deposition film formed of metal such as aluminum, a resin film such as polyvinyl alcohol, an ethylene-vinyl alcohol copolymer, and polyvinylidene chloride, and the like have been used as the gas barrier layer (for example, refer to Patent Documents 1 to 5).

However, in the metal foil or the metal vapor deposition film, various problems occurred, such as a problem in which the metal foil or the metal vapor deposition film had excellent gas barrier properties, but was opaque, and thus, it was not possible to confirm the contents, a problem in which stretching properties deteriorated, and thus, a crack occurred at stretching of a few %, and the gas barrier properties deteriorated, and a problem in which it was necessary that the metal foil or the metal vapor deposition film was treated as an incombustible material at the time of being discarded after being used.

In addition, the gas barrier layer formed of the resin film such as polyvinylidene chloride does not have humidity dependency and exhibits excellent gas barrier properties, but is likely to be a generation source of harmful substances such as dioxine at the time of performing a discard treatment or the like, and the packaging material containing chlorine-based substances tends to be disliked.

On the other hand, the gas barrier layer formed of the resin film such as non-chlorine-based polyvinyl alcohol or an ethylene-vinyl alcohol copolymer exhibited high gas barrier properties in a low humidity atmosphere, but had humidity dependency. Therefore, the gas barrier properties are considerably deteriorated along with an increase in humidity.

In addition, in a resin film having other gas barrier properties, the gas barrier properties deteriorated compared to the gas barrier properties of the resin film such as polyvinylidene chloride or the resin film such as polyvinyl alcohol in the low humidity atmosphere.

In order to improve the gas barrier properties of the resin film, a composite resin film of a resin and an inorganic layered mineral has been proposed. In the resin film, in order to improve the gas barrier properties, it is necessary that the inorganic layered mineral is arrayed on the inside of the film such that the inorganic layered mineral is orderly distributed.

However, an aggregation force of the resin film or an adhesion force with respect to the base of the resin film decreased as the inorganic layered mineral was arrayed such that the inorganic layered mineral was regularly distributed, and thus, it was extremely difficult to make a packaging material with both high gas barrier properties and sufficient strength.

In contrast, a gas barrier film has been proposed in which water-based polyurethane is added to a composite body of the polyvinyl alcohol, the ethylene-vinyl alcohol copolymer, and the like, and a layered compound, and thus, the adhesiveness between the composite body and a base is improved (for example, refer to Patent Document 6). However, the gas barrier film did not have sufficient gas barrier properties under a high humidity atmosphere of greater than or equal to 80%RH.

On the other hand, a gas barrier resin laminated film which has excellent adhesiveness with respect to a base and low humidity dependency and is formed of a polyurethane resin having a high concentration of a urethane group or a high concentration of a urea group, and a polyamine compound has been proposed (for example, refer to Patent Document 7). However, in the gas barrier film, the gas barrier properties deteriorated compared to the resin film formed of the polyvinylidene chloride and the like, and an application range as a gas barrier packaging material was limited.

In addition, in the gas barrier film, lamination strength which does not deteriorate according to aging is required in a laminated film in which the other film is laminated on the gas barrier film by applying an adhesive agent onto the gas barrier coating film side (onto a coating film).

In addition, a coating device specified for forming a coating film has been used in manufacturing of the gas barrier packaging material, but in order to improve manufacturing efficiency, a method has been considered in which a multicolor printable gravure printer is used, and formation of a gas barrier layer with respect to a base and printing of a pattern are performed by inline coating (continuous coating in the same line) (for example, refer to Patent Document 8). However, when the gas barrier layer was formed by the method, the concentration of a coating liquid had to become high in order to ensure the thickness of a layer necessary for exhibiting a gas barrier function, and necessarily, the viscosity also became high, and thus, it was not possible to evenly form a film. In addition, in the gravure printer, a drying line is short and an arbitrary length is not able to be set, unlike a gravure coater. For this reason, in a case where the next layer is formed on the gas barrier layer or in order to dry the gas barrier layer until printing is able to be performed with respect to the gas barrier layer, the printing speed had to be slower, and a sufficient effect of improving manufacturing efficiency according to the gravure printer was not able to be obtained.

### PRIOR ART DOCUMENTS

### PATENT DOCUMENTS

[Patent Document 1] Japanese Unexamined Patent Application, First Publication No. 2001-287294
[Patent Document 2] Japanese Unexamined Patent Application, First Publication No. H11-165369
[Patent Document 3] Japanese Unexamined Patent Application, First Publication No. H6-93133
[Patent Document 4] Japanese Unexamined Patent Application, First Publication No. H9-150484
[Patent Document 5] Japanese Patent Publication No. 3764109
[Patent Document 6] Japanese Patent Publication No. 3351208
[Patent Document 7] Japanese Patent Publication No. 4434907
[Patent Document 8] Japanese Unexamined Patent Application, First Publication No. H11-70608

### SUMMARY OF THE INVENTION

### PROBLEMS TO BE SOLVED BY THE INVENTION

The present invention has been made in consideration of the circumstances described above, and an object of the present invention is to provide a water-based coating agent for gravure printing having excellent gas barrier properties under a high humidity atmosphere and gravure printing suitability, and a gas barrier film which includes a gas barrier coating film formed of the water-based coating agent for gravure printing, has sufficient adhesion strength and film aggregation strength as a material for packaging for a long period of time, and has reduced deterioration of lamination strength.

### MEANS FOR SOLVING THE PROBLEMS

A water-based coating agent for gravure printing according to a first aspect of the present invention, includes an aqueous polyurethane resin (A) which contains a polyurethane resin having an acid group and a polyamine compound; a water-soluble polymer (B); and an inorganic layered mineral (C) as a main constituent component, a solid compounding ratio of the aqueous polyurethane resin (A), the water-soluble polymer (B), and the inorganic layered mineral (C) in the total solid is in the following range, the total solid concentration is greater than or equal to 5 mass%, and viscosity at 23°C is less than or equal to 50 mPa·s, and the water-soluble polymer (B) is a polyvinyl alcohol resin having a degree of saponification of greater than or equal to 95% and a degree of polymerization of 300 to 1700, the aqueous polyurethane resin (A) is included at 5 to 60 mass% in the solid compounding ratio, the water-soluble polymer (B) is included at 25 to 80 mass% in the solid compounding ratio, and the inorganic layered mineral (C) is included at 8 to 20 mass% in the solid compounding ratio.

In the water-based coating agent for gravure printing, the inorganic layered mineral (C) may be water-swelling synthetic mica.

A gas barrier film according to a second aspect of the present invention, includes a base film formed of a plastic material; and a gas barrier coating film formed on one surface of the base film or both surfaces of the base film using the water-based coating agent for gravure printing according to the first aspect.

### Effects of Invention

The water-based coating agent for gravure printing according to the first aspect of the present invention contains the aqueous polyurethane resin (A), the water-soluble polymer (B), and the inorganic layered mineral (C) as a main constituent component, the solid compounding ratio of the constituent components is adjusted to be in a predetermined range, the total solid concentration is set to be greater than or equal to 5 mass%, the viscosity at 23°C is set to be less than or equal to 50 mPa·s, and the polyvinyl alcohol resin having a degree of saponification of greater than or equal to 95% and a degree of polymerization of 300 to 1700 is used as the water-soluble polymer (B). By using the water-based coating agent for gravure printing according to the first aspect, coating is able to be performed such that a coating film having a predetermined thickness is formed on a base or the like in a line identical to a printing line of a printing layer by a gravure printing method using a gravure printer. In particular, coating and printing of the water-based coating agent are able to be performed inline by using a one multicolor printer. In addition, in a coating step with respect to the base or the like, it is possible to increase the speed of a manufacturing line, and thus, it is possible to increase productivity.

In addition, in the water-based coating agent for gravure printing according to the first aspect, according to the configuration as described above, the gas barrier coating film formed of the water-based coating agent for gravure printing, which is formed by a known gravure printing method, has excellent gas barrier properties under a high humidity atmosphere, and also has excellent adhesiveness between the gas barrier coating film and the base and an excellent aggregation force of the gas barrier coating film. For this reason, by using the gas barrier film including the gas barrier coating film described above as the material for packaging, it is possible to increase quality retaining properties of the contents, and it is possible to use the gas barrier film as various materials for packaging.

The gas barrier film according to the second aspect of the present invention is formed of the water-based coating agent for gravure printing according to the first aspect, and includes the gas barrier coating film containing the aqueous polyurethane resin (A), the water-soluble polymer (B), and the inorganic layered mineral (C) as a main constituent component. By adjusting the solid compounding ratio of the constituent components to be in a predetermined range, the gas barrier film according to the second aspect has excellent gas barrier properties under a high humidity atmosphere, and also has excellent adhesiveness between the gas barrier coating film and the base and an excellent aggregation force of the gas barrier coating film for a long period of time. In addition, by applying an adhesive agent onto the gas barrier coating film side (onto the coating film) of the gas barrier film according to the second aspect, deterioration of lamination strength is reduced in a laminated film in which the other film is laminated. For this reason, by using the gas barrier film according to the second aspect as the material for packaging, it is possible to increase the quality retaining properties of the contents, and it is possible to use the gas barrier film as various materials for packaging.

### EMBODIMENTS FOR CARRYING OUT THE INVENTION

Embodiments of a water-based coating agent for gravure printing and a gas barrier film of the present invention will be described. Furthermore, this embodiment will be specifically described in order to allow the scope of the present invention to be easily understood, and the present invention is not limited to the embodiments unless otherwise particularly stated.

### [Water-Based Coating Agent for Gravure Printing]

A water-based coating agent for gravure printing according to a first embodiment contains an aqueous polyurethane resin (A) which contains a polyurethane resin having an acid group and a polyamine compound, a water-soluble polymer (B), and an inorganic layered mineral (C) as a main constituent component, a solid compounding ratio of the aqueous polyurethane resin (A), the water-soluble polymer (B), and the inorganic layered mineral (C) in the total solid is in the following range, the total solid concentration is greater than or equal to 5 mass%, viscosity at 23°C is less than or equal to 50 mPa·s, and the water-soluble polymer (B) is a polyvinyl alcohol resin having a degree of saponification of greater than or equal to 95% and a degree of polymerization of 300 to 1700.
Aqueous Polyurethane Resin (A) of 5 mass% to 60 mass%
Water-Soluble Polymer (B) of 25 mass% to 80 mass%
Inorganic Layered Mineral (C) of 8 mass% to 20 mass%

### [Aqueous Polyurethane Resin (A)]

Examples of the acid group of the polyurethane resin (an anionic self-emulsifying polyurethane resin) configuring the aqueous polyurethane resin (A) include a carboxyl group, a sulfone acid group, and the like.

The acid group may be positioned on a terminal or a side chain of the polyurethane resin, and it is preferable that the acid group be positioned on at least the side chain. The acid group is able to be neutralized by a neutralizing agent (a base) in general, and may form a salt with the base. Furthermore, the acid group is able to be bonded to an amino group (an imino group or a tertiary nitrogen atom) of the polyamine compound configuring the aqueous polyurethane resin (A).

The acid value of the polyurethane resin is able to be selected from a range in which water solubility or water dispersibility is able to be provided, is preferably 5 mgKOH/g to 100 mgKOH/g, is more preferably 10 mgKOH/g to 70 mgKOH/g, and is particularly preferably 15 mgKOH/g to 60 mgKOH/g.

When the acid value of the polyurethane resin is low, the water solubility and the water dispersibility of the polyurethane resin are not sufficient, and thus, even dispersibility of the polyurethane resin and other materials or dispersion stability of the coating agent decreases. When the acid value of the polyurethane resin is excessively high, water resistance or gas barrier properties of the gas barrier coating film decreases. According to the numerical range described above, these problems are able to be avoided.

In addition, the total concentration of the urethane group and the urea group of the polyurethane resin is preferably greater than or equal to 15 mass%, and is more preferably 20 mass% to 60 mass%, from the viewpoint of gas barrier properties.

When the total concentration of the urethane group and the urea group is low, the gas barrier properties of the gas barrier coating film decrease. When the total concentration of the urethane group and the urea group is excessively high, the gas barrier coating film becomes rigid and brittle. For this reason, it is preferable that the total concentration of the urethane group and the urea group of the polyurethane resin be in a range of 20 mass% to 60 mass%.

Furthermore, the concentration of the urethane group and the concentration of the urea group indicate values obtained by dividing the molecular weight of the urethane group (59 g/equivalent) or the molecular weight of the urea group (a primary amino group (an amino group): 58 g/equivalent, and a secondary amino group (an imino group): 57 g/equivalent) by the molecular weight of the repeating configuration unit of the polyurethane resin.

Furthermore, when a mixture is used as the polyurethane resin, the concentration of the urethane group and the concentration of the urea group are able to be calculated as a preparation base of a reaction component, that is, a use ratio of each component is able to be calculated as a base.

It is preferable that the polyurethane resin include at least rigid unit (unit configured of a hydrocarbon ring) and short chain unit (for example, unit configured of a hydrocarbon chain). That is, it is preferable that the repeating configuration unit of the polyurethane resin be derived from a polyisocyanate component, a polyhydroxy acid component, a polyol component, and a chain extender component (in particular, at least a polyisocyanate component), and has a hydrocarbon ring (at least one of an aromatic hydrocarbon ring and a non-aromatic hydrocarbon ring).

The ratio of the unit configured of the hydrocarbon ring to the repeating configuration unit of the polyurethane resin is preferably 10 mass% to 70 mass%, is more preferably 15 mass% to 65 mass%, and is particularly preferably 20 mass% to 60 mass%.

When the ratio of the unit configured of the hydrocarbon ring to the repeating configuration unit of the polyurethane resin is low, the gas barrier properties of the gas barrier coating film decrease. When the ratio of the unit configured of the hydrocarbon ring to the repeating configuration unit of the polyurethane resin is excessively high, the gas barrier coating film becomes rigid and brittle. Therefore, the numerical range described above is preferable.

The number average molecular weight of the polyurethane resin is able to be suitably selected, is preferably 800 to 1,000,000, is more preferably 800 to 200,000, and is even more preferably 800 to 100,000.

When the number average molecular weight of the polyurethane resin is excessively high, it is not preferable since the viscosity of the coating agent increases. When the number average molecular weight of the polyurethane resin is excessively low, the barrier properties of the gas barrier coating film decrease. Therefore, the numerical range described above is preferable.

The polyurethane resin may have crystallinity in order to increase gas barrier properties.

In addition, the glass transition point of the polyurethane resin is preferably higher than or equal to 100°C (for example, approximately 100°C to 200°C), is more preferably higher than or equal to 110°C (for example, approximately 110°C to 180°C), and is even more preferably higher than or equal to 120°C (for example, approximately 120°C to 150°C).

When the glass transition point of the polyurethane resin is lower than 100°C, it is not preferable since the gas barrier properties of the gas barrier coating film decrease. In addition, in the polyurethane resin satisfying each preferred range described above, the glass transition point of the polyurethane resin is substantially less likely to be higher than or equal to 150°C.

The aqueous polyurethane resin (A) contains the neutralizing agent, and it is preferable that the polyurethane resin be formed in a state of being dissolved or dispersed in an aqueous medium.

Examples of the aqueous medium include water, a water-soluble solvent, a hydrophilic solvent, or a mixed solvent thereof. Water or an aqueous solvent containing water as a main component is preferable as the aqueous medium.

Examples of the hydrophilic solvent include alcohols such as ethanol and isopropanol; ketones such as acetone and methyl ethyl ketone; ethers such as tetrahydrofuran; cellosolves; carbitols; nitriles such as acetonitrile; and the like.

The aqueous polyurethane resin (A) may be either an aqueous solution in which the polyurethane resin is dissolved in the aqueous medium or a water dispersion body in which the polyurethane resin is dispersed in the aqueous medium.

In the water dispersion body, the average particle diameter of dispersion particles (polyurethane resin particles) is not particularly limited, but is preferably 20 nm to 500 nm, is more preferably 25 nm to 300 nm, and is particularly preferably 30 nm to 200 nm.

When the average particle diameter of the dispersion particles is excessively large, even dispersibility of the dispersion particles and the other materials or the dispersion stability of the coating agent decreases, and thus, the gas barrier properties of the gas barrier coating film decrease. In addition, it is substantially difficult to obtain a dispersion body having an average particle diameter of the dispersion particles of less than 20 nm, and when the average particle diameter of the dispersion particles is less than 20 nm, an effect of further improving the dispersion stability of the coating agent or the gas barrier properties of the gas barrier coating film is not able to be expected.

A manufacturing method of the aqueous polyurethane resin (A) is not particularly limited, a general aqueous technology of the polyurethane resin such as an acetone method and a prepolymer method is used as the manufacturing method of the aqueous polyurethane resin (A).

In addition, in a urethanization reaction, a urethanization catalyst such as an amine-based catalyst, a tin-based catalyst, and a lead-based catalyst may be used, as necessary.

For example, the aqueous polyurethane resin (A) is able to be prepared by allowing a polyisocyanate compound, a polyhydroxy acid, and as necessary, at least one of a polyol component and a chain extender component to react with each other in an inert organic solvent such as ketones such as acetone, ethers such as tetrahydrofuran, and nitriles such as acetonitrile. More specifically, the polyisocyanate compound, the polyhydroxy acid, and the polyol component react with each other in the inert organic solvent (in particular, a hydrophilic organic solvent or a water-soluble organic solvent), and thus, a prepolymer having an isocyanate group on the terminal is generated. After that, after the prepolymer having an isocyanate group on the terminal is neutralized by the neutralizing agent and is dissolved or dispersed in the aqueous medium, the prepolymer is neutralized by adding a chain extender component and is subjected to a reaction, and the organic solvent is removed. Therefore, the aqueous polyurethane resin (A) is able to be prepared.

In the aqueous polyurethane resin (A), the polyamine compound as a cross-linking agent is bonded to the acid group of the polyurethane resin, and thus, the gas barrier properties are exhibited.

Furthermore, the bond between the polyamine compound and the acid group of the polyurethane resin may be an ion bond (for example, an ion bond between a tertiary amino group and a carboxyl group, and the like), or may be a covalent bond (for example, an amide bond and the like).

For this reason, various polyamines having two or more types of basic nitrogen atoms selected from the group consisting of a primary amino group, a secondary amino group, and a tertiary amino group are used as the polyamine compound.

The polyamine compound configuring the aqueous polyurethane resin (A) is not particularly limited insofar as the polyamine compound is bonded to the acid group and is able to improve the gas barrier properties, and various compounds are used as the polyamine compound.

Polyamine having an amine value of 100 mgKOH/g to 1900 mgKOH/g is preferably used, polyamine having an amine value of 150 mgKOH/g to 1900 mgKOH/g (for example, 200 mgKOH/g to 1700 mgKOH/g) is more preferably used, and polyamine having an amine value of 200 mgKOH/g to 1900 mgKOH/g (for example, 300 mgKOH/g to 1500 mgKOH/g) is particularly preferably used as the polyamine compound. The amine value of the polyamine compound may be approximately 300 mgKOH/g to 1900 mgKOH/g.

### [Water-Soluble Polymer (B)]

The water-soluble polymer (B) is a polymer which is able to be completely dissolved in water at room temperature or a polymer which is able to be finely dispersed in water at room temperature.

The water-soluble polymer (B) is a compound that is able to intrude between unit crystal layers of the inorganic layered mineral (C) described below and to be subjected to coordination (intercalation).

The water-soluble polymer (B) is a polyvinyl alcohol resin having a degree of saponification of greater than or equal to 95% and a degree of polymerization of 300 to 1700.

In the polyvinyl alcohol resin, hygroscopic swelling properties decrease as the degree of saponification or the degree of polymerization becomes higher.

When the degree of saponification of the polyvinyl alcohol resin is less than 95%, it is difficult to obtain sufficient gas barrier properties.

In addition, when the degree of polymerization of the polyvinyl alcohol resin is less than 300, the gas barrier properties decrease. In contrast, when the degree of polymerization of the polyvinyl alcohol resin is greater than 1700, viscosity of the water-based coating agent increases, and it is difficult to evenly mix the water-based coating agent with other components. For this reason, in a gas barrier coating film of which the degree of polymerization of the polyvinyl alcohol resin is greater than 1700, the gas barrier properties or the adhesiveness decrease, or a film formation state deteriorates in gravure printing using a gravure printer. In addition, the amount of the liquid component in the coating agent to be applied onto the film increases as the solid concentration becomes lower at the time of decreasing the viscosity by decreasing the solid concentration. For this reason, it is not preferable since a line speed becomes slow according to an increase in drying energy of the liquid component of the coating agent and an increase in a drying time, and productivity decreases. In addition, the amount of solid which is able to be applied onto the film at one time decreases, and thus, the number of times of overcoating with respect to the film has to increase. That is, by using the polyvinyl alcohol resin having a degree of polymerization of less than or equal to 1700, it is possible to limit an increase in the viscosity of the water-based coating agent. In addition, it is possible to evenly mix and disperse the polyvinyl alcohol resin and the other components. For this reason, when the polyvinyl alcohol resin has a high concentration, low viscosity of the water-based coating is realized. Therefore, the water-based coating agent is able to be stabilized, the coating amount or a drying load due to a high concentration of the polyvinyl alcohol resin is able to be reduced, and thus, the productivity of gravure printing is also improved.

### [Inorganic Layered Mineral (C)]

The inorganic layered mineral (C) is an inorganic compound forming one layered particle in which an extremely thin unit crystal layer is superimposed.

Compounds which swell in water and are cleaved are preferable as the inorganic layered mineral (C), and among them, a clay compound having swelling properties with respect to water is particularly preferably used. More specifically, the inorganic layered mineral (C) is a clay compound which has properties of absorbing water and swelling by coordinating water between the extremely thin unit crystal layers. In general, the clay compound is a compound forming a layered structure by bonding a layer configuring a tetrahedral structure by coordinating Si⁴⁺ with respect to O²⁻ and a layer configuring an octahedral structure by coordinating Al³⁺, Mg²⁺, Fe²⁺, Fe³⁺, and the like with respect to O²⁻ and OH⁻ at a ratio of 1 to 1 or 2 to 1, and by laminating the layers. The clay compound may be a natural compound, or a synthetic compound.

Representative examples of the inorganic layered mineral (C) include hydrous silicate such as phyllosilicate mineral, for example, kaolinite group clay mineral such as halloysite, kaolinite, endellite, dickite, and nacrite, antigorite group clay mineral such as antigorite and chrysotile, smectite group clay mineral such as montmorillonite, beidellite, nontronite, saponite, hectorite, sauconite, and stevensite, vermiculite group clay mineral such as vermiculite, mica such as white mica and gold mica, mica or mica group clay mineral such as margarite, tetracyrillic mica, and taeniolite, and the like.

One type of inorganic layered mineral (C) is used or two or more types thereof are used in combination.

Among the inorganic layered minerals (C), the smectite group clay mineral such as montmorillonite and the mica group clay mineral such as water-swelling mica are particularly preferable.

In the size of the inorganic layered mineral (C), when an aspect ratio is high, it is preferable that the average particle diameter be less than or equal to 10 µm and the thickness be less than or equal to 500 nm, from the viewpoint of excellent barrier properties of the film. It is particularly preferable that at least one of the inorganic layered minerals (C) be water-swelling synthetic mica having an average particle diameter of 1 µm to 10 µm and a thickness of 10 nm to 100 nm.

When the water-swelling synthetic mica is used as the inorganic layered mineral (C), the water-swelling synthetic mica has high compatibility with respect to the aqueous polyurethane resin (A) and the water-soluble polymer (B). In addition, the water-swelling synthetic mica has a small amount of impurities compared to natural mica, and thus, in the gas barrier coating film, a decrease in the gas barrier properties due to the impurities or a decrease in a film aggregation force does not occur. Further, the water-swelling synthetic mica has a fluorine atom in a crystal structure, and thus, limits a decrease in humidity dependency of the gas barrier properties of the gas barrier coating film formed of the water-based coating agent. In addition, the water-swelling synthetic mica has a high aspect ratio, compared to other water-swelling inorganic layered minerals, and thus, a labyrinth effect becomes more effective, in particular, and high gas barrier properties of the gas barrier coating film formed of the water-based coating agent are exhibited.

In the water-based coating agent for gravure printing according to this embodiment, the solid compounding ratio of the aqueous polyurethane resin (A), the water-soluble polymer (B), and the inorganic layered mineral (C) in the total solid is in the following range.
Aqueous Polyurethane Resin (A) of 5 mass% to 60 mass%
Water-Soluble Polymer (B) of 25 mass% to 80 mass%
Inorganic Layered Mineral (C) of 8 mass% to 20 mass%

In this embodiment, the compounding ratio of the aqueous polyurethane resin (A) in the total solid is 5 mass% to 60 mass%, and is preferably 5 mass% to 55 mass%, is more preferably 5 mass% to 50 mass%, and is particularly preferably 5 mass% to 45 mass%.

When the solid compounding ratio of the aqueous polyurethane resin (A) in the total solid is less than 5 mass%, wettability and adhesiveness between the gas barrier coating film formed of the water-based coating agent and the base film become insufficient.

In contrast, when the solid compounding ratio of the aqueous polyurethane resin (A) is greater than 60 mass%, a decrease in film aggregation strength of the gas barrier coating film formed of the water-based coating agent occurs according to aging.

In addition, when the compounding ratio described below of the solid compounding ratio of the water-soluble polymer (B) in the total solid and the solid compounding ratio of the inorganic layered mineral (C) in the total solid is satisfied, it is preferable that the compounding ratio of the aqueous polyurethane resin (A) in the total solid be in the numerical range described above.

In this embodiment, the compounding ratio of the water-soluble polymer (B) in the total solid is 25 mass% to 80 mass%, is preferably 30 mass% to 80 mass%, is more preferably 30 mass% to 75 mass%, and is particularly preferably 35 mass% to 75 mass%.

When the solid compounding ratio of the water-soluble polymer (B) in the total solid is less than 25 mass%, the aggregation strength of the gas barrier coating film formed of the water-based coating agent decreases according to aging. In contrast, when the solid compounding ratio of the water-soluble polymer (B) is greater than 80 mass%, the wettability and the adhesiveness between the gas barrier coating film and the base film become insufficient.

In addition, in order to make aging stability of the aggregation strength of the gas barrier coating film and the adhesion strength of the gas barrier coating film with respect to the base, and wettability with respect to the base film of the gas barrier coating film and the gas barrier properties of the gas barrier coating film under a high humidity atmosphere compatible, the numerical range described above is particularly preferable.

In the water-based coating agent according to this embodiment, it is considered that it is possible to increase a coordination (intercalation) ratio between the unit crystal layers of the inorganic layered mineral (C) by increasing the solid compounding ratio of the water-soluble polymer (B). Accordingly, it is assumed that a gas barrier film having a reduced aging deterioration of the lamination strength is able to be prepared.

In this embodiment, the compounding ratio of the inorganic layered mineral (C) in the total solid is 8 mass% to 20 mass%, is preferably 8 mass% to 18 mass%, is more preferably 10 mass% to 18 mass%, and is particularly preferably 10 mass% to 15 mass%.

When the solid compounding ratio of the inorganic layered mineral (C) in the total solid is less than 8 mass%, sufficient gas barrier properties are not able to be obtained in the gas barrier coating film formed of the water-based coating agent. In contrast, when the solid compounding ratio of the inorganic layered mineral (C) is greater than 20 mass%, the adhesiveness between the gas barrier coating film formed of the water-based coating agent and the base film and the aggregation strength of the gas barrier coating film formed of the water-based coating agent decrease according to aging.

When the solid compounding ratio is not in a predetermined range, and the aggregation strength of the gas barrier coating film, and the adhesion strength of the gas barrier coating film with respect to the base decrease due to aging, in the laminated film where the other film is laminated by applying the adhesive agent onto the gas barrier coating film side (onto the coating film), the lamination strength deteriorates due to aging.

In addition, in order to make the aging stability of the aggregation strength of the gas barrier coating film and the adhesion strength of the gas barrier coating film with respect to the base, and the gas barrier properties of the gas barrier coating film under a high humidity atmosphere compatible, the numerical range described above is particularly preferable.

In addition, in the water-based coating agent for gravure printing according to this embodiment, when a water-soluble reactive curing agent or a water dispersible reactive curing agent is added to the water-based coating agent, base adhesiveness, film aggregation strength, water resistance, and solvent resistance are further improved.

Examples of the reactive curing agent include water dispersible (water-soluble) polyisocyanate, water dispersible (water-soluble) carbodiimide, a water-soluble epoxy compound, a water dispersible (water-soluble) oxazolidone compound, a water-soluble aziridine-based compound, and the like.

Further, the water-based coating agent according to this embodiment may contain various additives within a range not impairing the gas barrier properties and the strength as a laminated film for packaging.

Examples of the additive include an antioxidant, a weathering agent, a heat stabilizer, a lubricant, a nucleating agent, an ultraviolet absorbent, a plasticizer, an antistatic agent, a coloring agent, a filler, a surfactant, a silane coupling agent, and the like.

The water-based coating agent according to this embodiment mainly contains water as a solvent, and may contain a solvent which is dissolved in water or evenly mixed with water.

Examples of the solvent include alcohols such as methanol, ethanol, and isopropanol, ketones such as acetone and methyl ethyl ketone, ethers such as tetrahydrofuran, nitriles such as cellosolves, carbitols, and acetonitrile, and the like.

In addition, the water-based coating agent according to this embodiment contains the aqueous polyurethane resin (A), the water-soluble polymer (B), and the inorganic layered mineral (C) as a main constituent component, and the solid compounding ratio of the aqueous polyurethane resin (A), the water-soluble polymer (B), and the inorganic layered mineral (C) in the total solid is in a range of the aqueous polyurethane resin (A) of 5 mass% to 60 mass%, the water-soluble polymer (B) of 25 mass% to 80 mass%, and the inorganic layered mineral (C) of 8 mass% to 20 mass%, and thus, the water-based coating agent according to this embodiment does not contain a compound which becomes a generation source of harmful substances at the time of being discarded.

The aqueous polyurethane resin (A) has a rigid molecular skeleton unlike a general polyurethane resin, and thus, has gas barrier properties. In addition, as with the general polyurethane resin, in the aqueous polyurethane resin (A), a drying coating film is not dissolved in water, and thus, the aqueous polyurethane resin (A) has low humidity dependency. For this reason, when the aqueous polyurethane resin (A) is used, a coating film having gas barrier properties is formed. However, gas barrier properties of a unit of the aqueous polyurethane resin (A) considerably deteriorate compared to a polyvinylidene chloride resin or the like. Therefore, the gas barrier properties are improved according to the added amount of the inorganic layered mineral (C) by adding the inorganic layered mineral (C), and thus, gas barrier properties which are higher than or equal to those of a polyvinylidene chloride resin are able to be obtained. However, the aggregation force of the coating film rapidly weakens according to an increase in the added amount of the inorganic layered mineral (C), and thus, the adhesion strength as the laminated film for packaging is not able to be maintained.

In addition, a composite gas barrier coating film of the water-soluble polymer (B) (for example, a polyvinyl alcohol resin and the like) and the water-swelling inorganic layered mineral (C) has been known from the related art, but the aggregation force of the coating film and the adhesion strength of the coating film with respect to the base decreased, and thus, it was necessary to add a cross-linking component.

However, high gas barrier properties and an even molecular array were impeded by adding the cross-linking component, and thus, it was extremely difficult to make high gas barrier properties of the composite coating film of the water-soluble polymer (B) and the water-swelling inorganic layered mineral (C) under a high humidity atmosphere and sufficient adhesion strength compatible.

In addition, in the gas barrier film, the lamination strength which does not deteriorate due to aging is required in the laminated film on which the other film is laminated by applying the adhesive agent onto the gas barrier coating film side (onto the coating film).

The water-based coating agent for gravure printing according to this embodiment contains the aqueous polyurethane resin (A), the water-soluble polymer (B), and the inorganic layered mineral (C) as a main constituent component, the solid compounding ratio of the constituent components is adjusted to be in a predetermined range, the total solid concentration is set to be greater than or equal to 5 mass%, and the viscosity at 23°C is set to be less than or equal to 50 mPa·s, and the polyvinyl alcohol resin having a degree of saponification of greater than or equal to 95% and a degree of polymerization of 300 to 1700 is used as the water-soluble polymer (B). In the water-based coating agent for gravure printing according to this embodiment, even when the solid concentration is high, the viscosity is low. For this reason, by using the water-based coating agent for gravure printing according to this embodiment, the water-based coating agent is able to be applied onto the film such that a coating film having a predetermined thickness is formed on the base or the like in a line identical to a printing line of a printing layer by a gravure printing method using a known gravure printer. At this time, in order to obtain a predetermined film thickness, the coating is able to be repeated a plurality of times, and a predetermined film thickness is able to be obtained by performing coating less number of times. In addition, the water-based coating agent for gravure printing according to this embodiment has the configuration as described above, and thus, in a step of applying the coating agent onto the base or the like (a printing step of the gravure printing), it is possible to increase the speed of the manufacturing line. Thus, the water-based coating agent for gravure printing according to this embodiment does not make the speed of the printing step slow, and thus, has an effect of increasing productivity.

In addition, the water-based coating agent for gravure printing according to this embodiment has the configuration described above, and thus, is able to make high gas barrier properties of the gas barrier coating film formed of the water-based coating agent for gravure printing which is formed by a known gravure printing method under a high humidity atmosphere, and sufficient adhesion strength (a film aggregation force) as the laminated film for packaging compatible for a long period of time.

In addition, the gas barrier coating film formed of the water-based coating agent for gravure printing according to this embodiment has excellent gas barrier properties under a high humidity atmosphere, and also has excellent adhesiveness and an excellent aggregation force with respect to the base. In addition, in the laminated film where the other film is laminated by applying the adhesive agent onto the gas barrier coating film side (onto the coating film) formed of the water-based coating agent for gravure printing according to this embodiment, a decrease in the lamination strength is reduced. For this reason, by using the gas barrier film including the gas barrier coating film as the material for packaging, it is possible to increase the quality retaining properties of the contents, and it is possible to use the gas barrier film as various materials for packaging.

Further, the water-based coating agent for gravure printing according to this embodiment is able to reduce the occurrence of harmful substances at the time of being discarded.

### [Gas Barrier Film]

A gas barrier film according to a second embodiment of the present invention includes a base film formed of a plastic material, and a gas barrier coating film formed of the water-based coating agent for gravure printing according to the first embodiment of the present invention on one surface of the base film or both surfaces of the base film.

That is, the coating film is a gas barrier coating film which contains the aqueous polyurethane resin (A) containing the polyurethane resin having an acid group and the polyamine compound, the water-soluble polymer (B), and the inorganic layered mineral (C) as a main constituent component. In addition, the ratio of the aqueous polyurethane resin (A), the water-soluble polymer (B), and the inorganic layered mineral (C) in the gas barrier coating film is in the following range.
Aqueous Polyurethane Resin (A) of 5 mass% to 60 mass%
Water-Soluble Polymer (B) of 25 mass% to 80 mass%
Inorganic Layered Mineral (C) of 8 mass% to 20 mass%

The aqueous polyurethane resin (A), the water-soluble polymer (B), and the inorganic layered mineral (C) in the gas barrier coating film which is the constituent component of the gas barrier film according to this embodiment, are identical to the compounds in [Water-Based Coating Agent for Gravure Printing] according to the first embodiment.

In the gas barrier coating film which is the constituent component of the gas barrier film according to this embodiment, it is preferable that the degree of saponification of the water-soluble polymer (B) be greater than or equal to 95%.

In addition, in the gas barrier coating film which is the constituent component of the gas barrier film according to this embodiment, it is preferable that the inorganic layered mineral (C) be water-swelling synthetic mica.

When the aqueous polyurethane resin (A) is less than 5 mass%, the wettability and the adhesiveness between the gas barrier coating film and the base film become insufficient. In contrast, when the aqueous polyurethane resin (A) is greater than 60 mass%, the adhesion strength between the gas barrier coating film and the base film decreases according to aging.

When the water-soluble polymer (B) is less than 25 mass%, the aggregation strength as the gas barrier coating film decreases according to aging. In contrast, when the water-soluble polymer (B) is greater than 80 mass%, the wettability and the adhesiveness between the gas barrier coating film and the base film become insufficient. In addition, the gas barrier properties of the gas barrier coating film under a high humidity atmosphere decrease.

When the inorganic layered mineral (C) is less than 8 mass%, sufficient gas barrier properties of the gas barrier coating film are not able to be obtained. In contrast, when the inorganic layered mineral (C) is greater than 20 mass%, the adhesiveness between the gas barrier coating film and the base film and the aggregation strength of the coating film decrease according to aging.

When the solid compounding ratio is not in a predetermined range, and the aggregation strength of the gas barrier coating film and the adhesion strength between the gas barrier coating film and the base decrease due to aging, in the laminated film where the other film is laminated on the gas barrier coating film side (on the coating film) by dry lamination processing, the lamination strength deteriorates due to aging.

### [Base Film Formed of Plastic Material]

Examples of the base film formed of the plastic material include films formed of a polyolefin-based resin having 2 to 10 carbon atoms, such as polyethylene, polypropylene, and a propylene-ethylene copolymer, a polyester-based resin such as polyethylene terephthalate, and polybutylene terephthalate, a polyamide-based resin such as aliphatic polyamide such as nylon 6 and nylon 66, aromatic polyamide such as polymethaxylylene adipamide, a vinyl-based resin such as polystyrene, polyvinyl acetate, an ethylene-vinyl acetate copolymer, polyvinyl alcohol, and an ethylene-vinyl alcohol copolymer, an acrylic resin of a homopolymer or a copolymer of an (meth)acrylic monomer such as polymethyl methacrylate and polyacrylonitrile, cellophane, and the like. One type of the resin is used or two or more types of the resin are used in combination.

At least one of a single layer film configured of a single resin and a single layer or a laminated film formed of a plurality of resins is used as the base film. In addition, a laminated base in which the resins are laminated on the other base (metal, wood, paper, ceramic, and the like) may be used.

Among them, a polyolefin-based resin film (in particular, a polypropylene film and the like), a polyester-based resin film (in particular, a polyethylene terephthalate-based resin film), a polyamide-based resin film (in particular, a nylon film), and the like are preferably used as the base film.

The base film may be an unstretched film, may be a monoaxial or biaxial stretching alignment film, or may be a film which is subjected to a surface treatment (a corona discharge treatment or the like), an anchor coating treatment, or an undercoating treatment. Further, the base film may be a laminated film on which a plurality of resins, metals, and the like are laminated.

In addition, in the base film, a surface to be coated (a surface on which the gas barrier coating film is formed) is subjected to a corona treatment, a low temperature plasma treatment, and the like, and thus, excellent wettability with respect to the coating agent and adhesion strength with respect to the gas barrier coating film are able to be obtained.

The thickness of the base film is not particularly limited, but is suitably selected according to the price or the application in consideration of suitability as a packaging material or lamination suitability as other coating films (layers), and is practically 3 µm to 200 µm, is preferably 5 µm to 120 µm, and is more preferably 10 µm to 100 µm.

Further, the gas barrier film according to this embodiment, as necessary, may include a printing layer, an anchor coat layer, an overcoat layer, a light shielding layer, an adhesive agent layer, a heat seal layer, and the like.

The gas barrier coating film containing the aqueous polyurethane resin (A), the water-soluble polymer (B), and the inorganic layered mineral (C) as a main constituent component is formed by a known gravure printing method by applying the water-based coating agent for gravure printing onto the base film, and then by drying and removing a solvent component.

The gas barrier coating film is formed on the base film by the following method. First, the water-based coating agent for gravure printing is applied onto one surface of the base film or both surfaces of the base film by using a gravure printing method using a gravure multicolor printer. After that, the coating film formed by applying the coating agent is dried.

A known drying method such as hot air drying, heating roll drying, and infrared irradiation is used as a method of drying the water-based coating agent for gravure printing.

In this embodiment, the gas barrier coating film and a printing layer are able to be formed inline by using a general gravure multicolor printer. In order to form the gas barrier layer (the gas barrier coating film), the gravure multicolor printer is at least one unit to two units, and it is preferable that one unit (one color) be able to be ensured for printing, and it is preferable that the gravure multicolor printer be three or more units (corresponding to three or more colors). Further, when there is a margin in the unit, overcoating or undercoating is able to be performed inline. In a case of a packaging material of food or medicine, a configuration having printings is general, and thus, it is possible to decrease the cost by integrating steps. In this case, the printing may be performed after the gas barrier coating film is formed on the base film, or the gas barrier coating film may be formed on the base film after the printing is performed on the base film.

The thickness of the gas barrier coating film formed on the base film after being dried is set according to gas barrier properties to be obtained, is preferably 0.1 µm to 5 µm, and is more preferably 0.2 µm to 2 µm.

When the thickness of the gas barrier coating film after being dried is less than 0.1 µm, it is difficult to obtain sufficient gas barrier properties. In contrast, when the thickness of the gas barrier coating film after being dried is greater than 5 µm, it is not preferable since it is difficult to provide an even surface of the coating film, and thus, the drying load and the manufacturing costs increase.

In addition, in order to make the gas barrier properties, a reduction in the drying load, and a reduction in the manufacturing costs compatible at a higher level, it is particularly preferable that the thickness of the gas barrier coating film after being dried be in the numerical range described above (0.2 µm to 2 µm).

The gas barrier film according to this embodiment may contain various additives within a range not impairing the gas barrier properties or the strength as the laminated film for packaging.

Examples of the additive include a reactive curing agent such as polyisocyanate, carbodiimide, an epoxy compound, an oxazolidone compound, and an aziridine-based compound, an antioxidant, a weathering agent, a heat stabilizer, a lubricant, a nucleating agent, an ultraviolet absorbent, a plasticizer, an antistatic agent, a coloring agent, a filler, a surfactant, a silane coupling agent, and the like.

In addition, the gas barrier film according to this embodiment is able to form a gas barrier laminated film for packaging which is able to be sealed by heat sealing by laminating a heat sealable thermally fused layer.

In the gas barrier film according to this embodiment, the heat sealable thermally fused layer is able to be laminated by a known dry lamination method, a known extrusion lamination method, and the like using a known adhesive agent such as a polyurethane-based adhesive agent, a polyester-based adhesive agent, and a polyether-based adhesive agent.

The gas barrier film according to this embodiment is formed by the water-based coating agent for gravure printing, and includes the gas barrier coating film which contains the aqueous polyurethane resin (A), the water-soluble polymer (B), and the inorganic layered mineral (C) as a main constituent component. By adjusting the solid compounding ratio of the constituent components to be in a predetermined range, the gas barrier film according to this embodiment has excellent gas barrier properties under a high humidity atmosphere, and also has excellent adhesiveness between the gas barrier coating film and the base and an excellent aggregation force of the gas barrier film for a long period of time. In addition, in the laminated film where the other film is laminated by applying the adhesive agent onto the gas barrier coating film side (onto the coating film) of the gas barrier film according to this embodiment, deterioration of the lamination strength is reduced. For this reason, the gas barrier film according to this embodiment is used as the material for packaging, and thus, it is possible to increase the quality retaining properties of the contents, and it is possible to use the gas barrier film as various materials for packaging.

In addition, the gas barrier film according to this embodiment is able to reduce the occurrence of harmful substances at the time of being discarded.

### [Examples]

Hereinafter, the present invention will be more specifically described by examples, reference examples and comparative examples.

### [Manufacturing Example]

45.5 g of metaxylilene diisocyanate (hereinafter, may be referred to as "mXDI"), 93.9 g of 1,3-bis(isocyanate methyl) cyclohexane (hereinafter, may be referred to as "hydrogenated XDI"), 24.8 g of ethylene glycol, 13.4 g of a dimethylol propionic acid, and 80.2 g of methyl ethyl ketone as a solvent were mixed and were subjected to a reaction at 70°C for 5 hours under a nitrogen atmosphere, and thus, a carboxyl group-containing urethane prepolymer solution was prepared.

Next, the carboxyl group-containing urethane prepolymer solution was neutralized at 40°C by 9.6 g of triethyl amine.

The neutralized carboxyl group-containing urethane prepolymer solution was added to 624.8 g of water and was dispersed in the water by a homodisper (a high speed stirrer), and a chain elongation reaction was performed by adding 21.1 g of 2-[(2-aminoethyl) amino] ethanol. After that, a polyurethane resin having a water dispersion type acid group of which the solid was 25 mass%, the average particle diameter was 90 nm, and the acid value was 26.9 mgKOH/g was obtained by distilling methyl ethyl ketone.

Next, the polyurethane resin and γ-(2-aminoethyl) aminopropyl methyl dimethoxy silane (an amine value of 544 mgKOH/g) as a polyamine compound were mixed at a ratio in which a molar ratio of an acid group and a basic nitrogen atom became 1/1, and thus, an aqueous polyurethane resin of the manufacturing example was obtained.

### [Examples 1 to 10 and 12, and Reference Examples 11 and 13 to 16 useful for understanding the invention]

The aqueous polyurethane resin of the manufacturing example described above, polyurethane dispersion Takerack WPB-341 manufactured by Mitsui Chemicals, Inc., or polyurethane dispersion Takerack WPB-363 manufactured by Mitsui Chemicals, Inc. was used as the aqueous polyurethane resin (A) containing the polyurethane resin having an acid group and the polyamine compound (hereinafter, may be referred to as a component (A)).

The following three types of polyvinyl alcohol resins and carboxyl methyl cellulose (CMC) were used as the water-soluble polymer (B) (hereinafter, may be referred to as a component (B)).

POVAL PVA-105 manufactured by KURARAY CO., LTD. (a degree of saponification of 98% to 99% and a degree of polymerization of 500).

POVAL PVA-110 manufactured by KURARAY CO., LTD. (a degree of saponification of 98% to 99% and a degree of polymerization of 1100).

POVAL PVA-117 manufactured by KURARAY CO., LTD. (a degree of saponification of 98% to 99% and a degree of polymerization of 1700).

Two types of water-swelling synthetic micas (Somasif MEB-3 manufactured by Co-op Chemical Co., Ltd. and NTS-5 manufactured by TOPY INDUSTRIES LIMITED), sodium hectorite (NHT-solB2 manufactured by TOPY INDUSTRIES LIMITED), and refined montmorillonite (Kunipia-F manufactured by KUNIMINE INDUSTRIES CO., LTD.) were used as the inorganic layered mineral (C) (hereinafter, may be referred to as a component (C)).

The component (A), the component (B), and the component (C) were compounded at solid compounding ratios shown in Tables 1 and 2, were heated at 80°C, and were mixed. After that, the mixture was cooled to room temperature and was diluted with ion exchange water and isopropanol such that 10 mass% of a solvent was isopropanol, and the final solid concentration became 9%, and a curing agent (water-soluble polyisocyanate Takenate WD-725 and Takenate WD-730 manufactured by Mitsui Chemicals, Inc.) shown in Tables 1 and 2 was added thereto immediately before coating, and thus, water-based coating agents of Examples 1 to 10 and 12, and Reference Examples 11 and 13 to 16 were prepared.

### [Comparative Examples 1 to 4]

A polyester polyurethane resin aqueous solution Hydran HW350 manufactured by DIC CORPORATION and a polyether polyurethane resin aqueous solution Estrane H-38 manufactured by DKS Co., Ltd. were used as a general water-soluble polyurethane resin instead of the component (A).

A polyvinyl alcohol resin POVAL PVA-117 manufactured by KURARAY CO., LTD (a degree of saponification of 98% to 99% and a degree of polymerization of 1700) was used as the component (B).

Water-swelling synthetic mica (Somasif MEB-3 manufactured by Co-op Chemical Co., Ltd.) was used as the component (C).

The component (A), the component (B), and the component (C) were compounded at solid compounding ratios shown in Table 3, were heated at 80°C, and were mixed. After that, the mixture was cooled to room temperature and was diluted with ion exchange water and isopropanol such that 10 mass% of a solvent was isopropanol, and the final solid concentration became 9%, and a curing agent (water-soluble polyisocyanate Takenate WD-725 manufactured by Mitsui Chemicals, Inc.) shown in Table 3 was added thereto immediately before coating, and thus, water-based coating agents of Comparative Examples 1 to 4 were prepared.

### [Comparative Examples 5 to 21]

The aqueous polyurethane resin of the manufacturing example and polyurethane dispersion Takerack WPB-341 manufactured by Mitsui Chemicals, Inc. were used as the component (A).

A polyvinyl alcohol resin POVAL PVA-110 manufactured by KURARAY CO., LTD (a degree of saponification of 98% to 99% and a degree of polymerization of 1000) and carboxyl methyl cellulose (CMC) were used as the component (B).

Water-swelling synthetic mica (Somasif MEB-3 manufactured by Co-op Chemical Co., Ltd.) and refined montmorillonite (Kunipia-F manufactured by KUNIMINE INDUSTRIES CO., LTD.) were used as the component (C).

The component (A), the component (B), and the component (C) were compounded at solid compounding ratios shown in Tables 3 and 4, were heated at 80°C, and were mixed. After that, the mixture was cooled to room temperature and was diluted with ion exchange water and isopropanol such that 10 mass% of a solvent was isopropanol, and the final solid concentration became 9%, and a curing agent (water-soluble polyisocyanate Takenate WD-725 manufactured by Mitsui Chemicals, Inc.) shown in Table 3 was added thereto immediately before coating, and thus, water-based coating agents of Comparative Examples 7 to 9 and 13 to 21 were prepared.

A corona treatment surface of a biaxially stretched polyethylene terephthalate film P-60 manufactured by Toray Industries, Inc (a thickness of 12 µm, PET) or a biaxially stretched polypropylene film U-1 manufactured by Mitsui Chemicals Tohcello, Inc. (a thickness of 20 µm, OPP) was subjected to gravure printing by a gravure printer (a 9-color printer) manufactured by FUJI MACHINERY CO. LTD. using the water-based coating agents of Examples 1 to 16 and Comparative Examples 1 to 21, and thus, gas barrier films of Examples 1 to 16 and Comparative Examples 1 to 21 were obtained.

Furthermore, in the gravure printing, the same water-based coating agent was applied in the same conditions from a first unit to a third unit, and color printing of six colors was performed from a fourth unit to a ninth unit by using urethane-based gravure ink.

In addition, a line speed (a printing speed) was set as shown in Tables 1 to 4, the temperature of an oven from the first unit to the third unit was set to 90°C, and the air volume was set to 105 m³/min. Overcoating of the water-based coating agent was performed the number of times corresponding to the number of units shown in Tables 1 to 4 by using a gravure printing plate shown in Tables 1 to 4, and thus, inline coating of the water-based coating agent was performed.

### [Evaluation]

### (Viscosity Measurement)

In the water-based coating agents of Examples 1 to 16 and Comparative Examples 1 to 21, viscosity at 23°C was measured by using a vibration type viscometer. The results are shown in Tables 1 to 4.

### (Oxygen Gas Barrier Properties)

In the gas barrier films of Examples 1 to 16 and Comparative Examples 1 to 21, oxygen gas barrier properties were measured under an atmosphere of a temperature of 20°C and humidity of 80%RH by using an oxygen permeability measurement device (OXTRAN-2/20 manufactured by MOCON Inc.). The results are shown in Tables 1 to 4.

### (Lamination Strength)

An unstretched polypropylene film having a thickness of 30 µm (CPP GLC manufactured by Mitsui Chemicals Tohcello, Inc.) was laminated on the coating surface (the surface on which the gas barrier coating film was formed) of the gas barrier films of Examples 1 to 16 and Comparative Examples 1 to 21 by dry lamination processing through a polyester urethane-based adhesive agent (Takerack A-525 manufactured by Mitsui Chemicals, Inc./Takenate A-52 manufactured by Mitsui Chemicals, Inc.) and was cured at 40°C for 48 hours, and thus, a laminated film was obtained.

The laminated film was cut into the shape of a strip having a width of 15 mm, the gas barrier film was peeled off by 90° at a speed of 300 mm/minute using a tensile testing machine Tensilon (manufactured by A&D Company, Limited), and lamination strength was measured. The results are shown in Tables 1 to 4.

### (Lamination Strength of Laminated Film Retained for 2 Months under Conditions of Temperature of 40°C and Humidity of 75%RH)

An unstretched polypropylene film having a thickness of 30 µm (CPP GLC manufactured by Mitsui Chemicals Tohcello, Inc.) was laminated on the coating surface of the gas barrier films of Examples 1 to 16 and Comparative Examples 1 to 21 by dry lamination processing through a polyester urethane-based adhesive agent (Takerack A-525 manufactured by Mitsui Chemicals, Inc./Takenate A-52 manufactured by Mitsui Chemicals, Inc.) and was cured at 40°C for 48 hours, and thus, a laminated film was obtained. The laminated film was further retained in a thermostatic tank for two months under conditions of a temperature of 40°C and humidity of 75%RH.

The laminated film was cut into the shape of a strip having a width of 15 mm, by a tensile testing machine Tensilon, the gas barrier film was peeled off by 90° at a speed of 300 mm/minute, and the lamination strength was measured. The results are shown in Tables 1 to 4.

**[Table 1]**

| | | EXAMPLE | | | | | | | |
|---|---|---|---|---|---|---|---|---|---|
| | | 1 | 2 | 3 | 4 | 5 | 6 | 7 | 8 |
| A | COMPONENT (A) | MANUFACTURING EXAMPLE | MANUFACTURING EXAMPLE | MANUFACTURING EXAMPLE | MANUFACTURING EXAMPLE | MANUFACTURING EXAMPLE | MANUFACTURING EXAMPLE | MANUFACTURING EXAMPLE | MANUFACTURING EXAMPLE |
| | COMPOUNDING RATIO (MASS%) | 50 | 35 | 20 | 30 | 60 | 7 | 30 | 5 |
| B | COMPONENT (B) | PVA105 | PVA105 | PVA105 | PVA105 | PVA105 | PVA105 | PVA105 | PVA105 |
| | COMPOUNDING RATIO (MASS%) | 25 | 40 | 55 | 70 | 25 | 80 | 40 | 65 |
| C | COMPONENT (C) | SOMAS IF | SOMASIF | SOMASIF | SOMASIF | SOMASIF | SOMASIF | SOMASIF | SOMASIF |
| | COMPOUNDING RATIO (MASS%) | 15 | 15 | 15 | 15 | 8 | 8 | 20 | 20 |
| | | WD-725 | WD-725 | WD-725 | WD-725 | WD-725 | WD-725 | WD-725 | WD-725 |
| CURING AGENT | COMPOUNDING RATIO (MASS%) | 10 | 10 | 10 | 10 | 7 | 5 | 10 | 10 |
| SOLID CONCENTRATION (%) | | 9 | 9 | 9 | 9 | 9 | 9 | 9 | 9 |
| VISCOSITY (mPa·s) | | 10 | 20 | 35 | 45 | 8 | 45 | 25 | 45 |
| BASE FILM | | OPP | OPP | OPP | OPP | OPP | OPP | OPP | OPP |
| GRAVURE PRINTING PLATE | | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 10 *µ*m | 250 LINES 15 *µ*m |
| NUMBER OF UNITS USED FOR APPLYING COATING AGENT | | 2 | 2 | 3 | 3 | 3 | 3 | 3 | 3 |
| LINE SPEED (m/min) | | 150 | 150 | 150 | 150 | 150 | 150 | 150 | 150 |
| BARRIER LAYER DRY FILM THICKNESS (*µ*m) | | 0.5 | 0.5 | 0.7 | 0.7 | 0.7 | 0.7 | 0.6 | 0.7 |
| OXYGEN PERMEABILITY cm³/(m²·24h·atm) | | 5 | 5 | 4 | 5 | 7 | 7 | 5 | 6 |
| LAMINATION STRENGTH (N/15 mm) | | 1.4 | 1.8 | 2 | 1.8 | 2.3 | 2.1 | 1.4 | 1.6 |
| LAMINATION STRENGTH AFTER TWO MONTHS (N/15 mm) | | 1 | 1.3 | 1.4 | 1.5 | 1.4 | 1.5 | 1.1 | 1.3 |

**[Table 2]**

| | | EXAMPLE | | | | | | | |
|---|---|---|---|---|---|---|---|---|---|
| | | 9 | 10 | 11 * | 12 | 13 * | 14 * | 15 * | 16 * |
| A | COMPONENT (A) | WPB363 | WPB363 | WPB363 | WPB363 | WPB363 | WPB341 | WPB341 | WPB341 |
| | COMPOUNDING RATIO (MASS%) | 50 | 50 | 50 | 50 | 40 | 40 | 40 | 40 |
| B | COMPONENT (B) | PVA110 | PVA117 | CMC | PVA117 | CMC | CMC | CMC | CMC |
| | COMPOUNDING RATIO (MASS%) | 25 | 25 | 25 | 25 | 30 | 33 | 33 | 33 |
| C | COMPONENT (C) | SOMASIF | SOMASIF | SOMASIF | SOMASIF | KUNIPIA F | SOMASIF | NTS-5 | NHT |
| | COMPOUNDING RATIO (MASS%) | 15 | 15 | 15 | 15 | 20 | 12 | 12 | 12 |
| | | WD-725 | WD-725 | WD-725 | WD-730 | WD-725 | WD-725 | WD-725 | WD-725 |
| CURING AGENT | COMPOUNDING RATIO (MASS%) | 10 | 10 | 10 | 10 | 10 | 10 | 10 | 10 |
| SOLID CONCENTRATION (%) | | 9 | 9 | 9 | 9 | 9 | 9 | 9 | 9 |
| VISCOSITY (mPa·s) | | 10 | 45 | 30 | 45 | 50 | 45 | 45 | 45 |
| BASE FILM | | OPP | OPP | OPP | PET | PET | OPP | OPP | OPP |
| GRAVURE PRINTING PLATE | | 250 LINES 10 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m |
| NUMBER OF UNITS USED FOR APPLYING COATING AGENT | | 3 | 2 | 2 | 2 | 2 | 3 | 3 | 3 |
| LINE SPEED (m/min) | | 150 | 150 | 150 | 150 | 150 | 150 | 150 | 150 |
| BARRIER LAYER DRY FILM THICKNESS (*µ*m) | | 0.6 | 0.5 | 0.5 | 0.5 | 0.5 | 0.7 | 0.7 | 0.7 |
| OXYGEN PERMEABILITY cm³/(m²·24h·atm) | | 3 | 4 | 5 | 3 | 7 | 7 | 4 | 4 |
| LAMINATION STRENGTH (N/15 mm) | | 1.5 | 1.6 | 1.5 | 1.9 | 2.1 | 1.6 | 1.4 | 1.7 |
| LAMINATION STRENGTH AFTER TWO MONTHS (N/15 mm) | | 1.1 | 1.2 | 1.1 | 1.4 | 1.6 | 1.2 | 1.1 | 1.4 |

| | | | | | | | | | |
|---|---|---|---|---|---|---|---|---|---|
| * Reference Examples useful for understanding the invention. | | | | | | | | | |

**[Table 3]**

| | | COMPARATIVE EXAMPLE | | | | | | | | | |
|---|---|---|---|---|---|---|---|---|---|---|---|
| | | 1 | 2 | 3 | 4 | 5 | 6 | 7 | 8 | 9 | 10 |
| A | COMPONENT (A) | HW350 | H-38 | HW350 | HW350 | MANUFACTURING EXAMPLE | WPB341 | MANUFACTURING EXAMPLE | MANUFACTURING EXAMPLE | WPB341 | |
| | COMPOUNDING RATIO (MASS%) | 45 | 30 | 50 | 30 | 100 | 100 | 90 | 75 | 75 | 0 |
| B | COMPONENT (B) | PVA117 | PVA117 | PVA117 | PVA117 | - | - | - | - | - | PVA110 |
| | COMPOUNDING RATIO (MASS%) | 30 | 45 | 25 | 40 | 0 | 0 | 0 | 0 | 0 | 85 |
| C | COMPONENT (C) | SOMASIF | SOMASIF | SOMAS IF | SOMASIF | - | - | - | SOMASIF | SOMASIF | SOMASIF |
| | COMPOUNDING RATIO (MASS%) | 15 | 15 | 15 | 20 | 0 | 0 | 0 | 15 | 15 | 15 |
| | | WD-725 | WD-725 | WD-725 | WD-725 | - | - | WD-725 | WD-725 | WD-725 | - |
| CURING AGENT | COMPOUNDING RATIO (MASS%) | 10 | 10 | 10 | 10 | 0 | 0 | 10 | 10 | 10 | 0 |
| SOLID CONCENTRATION (%) | | 9 | 9 | 9 | 9 | 9 | 9 | 9 | 9 | 9 | 9 |
| VISCOSITY (mPa·s) | | 65 | 180 | 55 | 170 | 10 | 10 | 9 | 13 | 13 | 150 |
| BASE FILM | | OPP | OPP | OPP | OPP | PET | PET | PET | PET | PET | PET |
| GRAVURE PRINTING PLATE | | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m |
| NUMBER OF UNITS USED FOR APPLYING COATING AGENT | | 2 | 2 | 3 | 3 | 3 | 3 | 3 | 2 | 2 | 2 |
| LINE SPEED (m/min) | | 150 | 150 | 150 | 150 | 150 | 150 | 150 | 150 | 150 | 150 |
| BARRIER LAYER DRY FILM THICKNESS (*µ*m) | | 0.5 | 0.5 | 0.7 | 0.7 | 0.7 | 0.7 | 0.7 | 0.5 | 0.5 | 0.5 |
| OXYGEN PERMEABILITY cm³/(m²·24h·atm) | | >100 | >100 | >100 | >100 | 70 | 70 | 80 | 5 | 5 | 50 |
| LAMINATION STRENGTH (N/15 mm) | | 1.7 | 1.5 | 1.7 | 1.5 | 1.8 | 1.9 | 2.2 | 0.3 | 0.3 | 0.1 |
| LAMINATION STRENGTH AFTER TWO MONTHS (N/15 mm) | | 1.2 | 1 | 1.2 | 1.1 | 1.4 | 1.3 | 1.7 | 0.3 | 0.3 | 0.1 |

**[Table 4]**

| | | COMPARATIVE EXAMPLE | | | | | | | | | | |
|---|---|---|---|---|---|---|---|---|---|---|---|---|
| | | 11 | 12 | 13 | 14 | 15 | 16 | 17 | 18 | 19 | 20 | 21 |
| A | COMPONENT (A) | | - | MANUFACTURING EXAMPLE | MANUFACTURING EXAMPLE | MANUFACTURING EXAMPLE | MANUFACTURING EXAMPLE | MANUFACTURING EXAMPLE | MANUFACTURING EXAMPLE | WPB341 | WPB341 | WPB341 |
| | COMPOUNDING RATIO (MASS%) | 0 | 0 | 65 | 3 | 75 | 55 | 60 | 25 | 25 | 25 | 25 |
| B | COMPONENT (B) | CMC | PVA110 | PVA110 | PVA110 | PVA110 | PVA110 | PVA110 | PVA110 | CMC | CMC | CMC |
| | COMPOUNDING RATIO (MASS%) | 85 | 85 | 10 | 75 | 10 | 30 | 10 | 40 | 45 | 45 | 45 |
| C | COMPONENT (C) | SOMAS IF | KUNIPIA F | SOMASIF | SOMASIF | SOMASIF | SOMASIF | SOMASIF | SOMASIF | KUNIPIA F | KUNIPIA F | KUNIPIA F |
| | COMPOUNDING RATIO MASS | 15 | 15 | 15 | 15 | 5 | 5 | 25 | 25 | 20 | 20 | 20 |
| | | - | | WD-725 | WD-725 | WD-725 | WD-725 | WD-725 | WD-725 | WD-725 | WD-725 | WD-725 |
| CURING AGENT | COMPOUNDING RATIO (MASS%) | 0 | 0 | 10 | 7 | 10 | 10 | 10 | 10 | 10 | 10 | 10 |
| SOLID CONCENTRATION (%) | | 9 | 9 | 9 | 9 | 9 | 9 | 9 | 9 | 9 | 4 | 4 |
| VISCOSITY (mPa·s) | | 130 | 160 | 12 | 130 | 10 | 25 | 20 | 50 | 90 | 40 | 40 |
| BASE FILM | | PET | PET | OPP | OPP | OPP | OPP | OPP | OPP | OPP | OPP | OPP |
| GRAVURE PRINTING PLATE | | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 250 LINES 15 *µ*m | 200 LINES 20 *µ* m |
| NUMBER OF UNITS USED FOR APPLYING COATING AGENT | | 2 | 2 | 3 | 3 | 3 | 3 | 2 | 2 | 3 | 3 | 3 |
| LINE SPEED (m/min) | | 150 | 150 | 150 | 150 | 150 | 150 | 150 | 150 | 150 | 150 | 100 |
| BARRIER LAYER DRY FILM THICKNESS (*µ*m) | | 0.5 | 0.5 | 0.7 | 0.7 | 0.7 | 0.7 | 0.5 | 0.5 | 0.7 | 0.3 | 0.5 |
| OXYGEN PERMEABILITY cm³/(m²·24h·atm) | | 50 | 50 | 3 | 50 | 35 | 30 | 2 | 2 | 50 | 15 | 7 |
| LAMiNATION STRENGTH (N/15 mm) | | 0.1 | 0.3 | 1 | 0.2 | 2.5 | 2.7 | 0.4 | 0.8 | 2 | 2.2 | 2 |
| LAMINATION STRENGTH AFTER TWO MONTHS (N/15 mm) | | 0.1 | 0.2 | 0.3 | 0.2 | 1.3 | 1.8 | 0.3 | 0.4 | 1.6 | 1.6 | 1.5 |

From the results of Tables 3 and 4, in the gas barrier films of Comparative Examples 1 to 21, it was not possible to make the gas barrier films with both the oxygen barrier properties (oxygen permeability (less than or equal to 10 cm³/(m²·24h·atm)) under an atmosphere of 20°C and 80%RH) and the lamination strength (greater than or equal to 1.0 N/15 mm), and it was not possible to obtain properties applicable as a gas barrier packaging material.

From the result of Table 3, in the gas barrier films of Comparative Examples 1 to 4, aqueous polyurethane which did not contain the polyurethane resin having an acid group and the polyamine compound was used, and thus, the gas barrier properties of the aqueous polyurethane were low. In addition, in the gas barrier films of Comparative Examples 1 to 4, the viscosity at 23°C was greater than 50 mPa·s, and thus, a film formation state of a gravure printer deteriorated, and the value of the oxygen permeability under an atmosphere of a temperature of 20°C and humidity of 80%RH was greater than 100 cm³/(m²·24h*·*atm). Therefore, the oxygen gas barrier properties were not obtained.

From the results of Tables 3 and 4, in the gas barrier films of Comparative Examples 5 to 12, when any one of the component (A), the component (B), and the component (C) did not exist, either the oxygen permeability or the lamination strength considerably deteriorated.

As shown in the results of Table 4, in the gas barrier films of Comparative Examples 13 to 18, anyone compounding ratio of the component (A), the component (B), and the component (C) is not in the preferred range of the present invention. That is, in the gas barrier films of Comparative Examples 13 to 18, any one compounding ratio of the component (A) of 5 mass% to 60 mass%, the component (B) of 25 mass% to 80 mass%, and the component (C) of 8 mass% to 20 mass% was not satisfied, and thus, either the oxygen permeability or the lamination strength deteriorated.

From the results of Table 4, the water-based coating agent of Comparative Example 20 had a low solid concentration, and thus, a sufficient film thickness was not able to be obtained, and the oxygen gas barrier properties deteriorated.

From the results of Table 4, in Comparative Example 21, in order to obtain a sufficient film thickness, the coating amount of the water-based coating agent increased by increasing the depth of the gravure printing plate, but the water-based coating agent was insufficiently dried, the printing speed became slow, and the productivity deteriorated.

From the results of Tables 3 and 4, the water-based coating agents of Comparative Examples 1 to 4, 10 to 12, 14, and 19 had high viscosity, and thus, a film formation state in the gravure printing deteriorated, and the oxygen gas barrier properties deteriorated.

In contrast, from the results of Tables 1 and 2, in all of the water-based coating agents of Examples 1 to 10 and 12, and Reference Examples 11 and 13 to 16, excellent gravure printing suitability was confirmed. In the gas barrier films of Examples 1 to 16, the component (A), the component (B), and the component (C) are compounded at a predetermined solid compounding ratio of the first embodiment and the second embodiment. That is, all conditions of the compounding ratio of the component (A) of 5 mass% to 60 mass%, the component (B) of 25 mass% to 80 mass%, and the component (C) of 8 mass% to 20 mass% were satisfied, and thus, the value of the oxygen permeability under an atmosphere of a temperature of 20°C and humidity of 80%RH was less than or equal to 10 cm³/(m²·24h·atm), and excellent oxygen gas barrier properties were obtained. In addition, even after the gas barrier films of Examples 1 to 10 and 12, and Reference Examples 11 and 13 to 16 were retained in an atmosphere of 40°C and 75%RH for two months, the lamination strength of greater than or equal to 1.0 N/15 mm was maintained, and sufficient strength as a packaging material in general distribution conditions was maintained.

### Industrial Applicability

In the water-based coating agent for gravure printing and the gas barrier film of the present invention, high gas barrier properties under a high humidity atmosphere, and sufficient adhesion strength of the gas barrier coating film with respect to the base and the aggregation strength of the gas barrier coating film are compatible. In addition, in the water-based coating agent for gravure printing and the gas barrier film of the present invention, even when the laminated film laminated by applying the adhesive agent onto the gas barrier coating film side (onto the coating film) is retained under a high humidity atmosphere for a long period of time, deterioration of the lamination strength due to aging is reduced. For this reason, it is possible to use the gas barrier film to various fields as various packaging materials, and when the gas barrier film is used as the packaging material, it is possible to stably retain the quality of the contents for a long period of time. Further, in the gas barrier laminated body of the present invention, it is possible to reduce the occurrence of harmful substances at the time of being discarded.

## Claims

1. A water-based coating agent for gravure printing, comprising:
an aqueous polyurethane resin (A) which contains a polyurethane resin having an acid group and a polyamine compound;
a water-soluble polymer (B); and
an inorganic layered mineral (C) as a main constituent component;
wherein a solid compounding ratio of the aqueous polyurethane resin (A), the water-soluble polymer (B), and the inorganic layered mineral (C) in a total solid is in the following range, a total solid concentration is greater than or equal to 5 mass%, and viscosity at 23°C is less than or equal to 50 mPa·s,
the water-soluble polymer (B) is a polyvinyl alcohol resin having a degree of saponification of greater than or equal to 95% and a degree of polymerization of 300 to 1700,
the aqueous polyurethane resin (A) is included at 5 to 60 mass% in the solid compounding ratio,
the water-soluble polymer (B) is included at 25 to 80 mass% in the solid compounding ratio, and
the inorganic layered mineral (C) is included at 8 to 20 mass% in the solid compounding ratio.

2. The water-based coating agent for gravure printing according to Claim 1,
wherein the inorganic layered mineral (C) is water-swelling synthetic mica.

3. A gas barrier film, comprising:
a base film formed of a plastic material; and
a gas barrier coating film formed on one surface of the base film or both surfaces of the base film using the water-based coating agent for gravure printing according to Claim 1 or 2.

## Patentansprüche

1. Wasserbasiertes Beschichtungsmittel für Tiefdruck, umfassend:
ein wässriges Polyurethanharz (A), das ein Polyurethanharz mit einer Säuregruppe und eine Polyaminverbindung enthält;
ein wasserlösliches Polymer (B); und
ein anorganisches geschichtetes Mineral (C) als einen Hauptbestandteil;
wobei ein Feststoffmischungsverhältnis des wässrigen Polyurethanharzes (A), des wasserlöslichen Polymers (B) und des anorganischen geschichteten Minerals (C) in einem Gesamtfeststoff im folgenden Bereich liegt, eine Gesamtfeststoffkonzentration größer oder gleich 5 Massen-% ist und die Viskosität bei 23°C kleiner oder gleich 50 mPa·s ist,
das wasserlösliche Polymer (B) ein Polyvinylalkoholharz mit einem Verseifungsgrad von größer oder gleich 95% und einem Polymerisationsgrad von 300 bis 1700 ist,
das wässrige Polyurethanharz (A) mit 5 bis 60 Massen-% im Feststoffmischungsverhältnis beinhaltet ist,
das wasserlösliche Polymer (B) mit 25 bis 80 Massen-% im Feststoffmischungsverhältnis beinhaltet ist und
das anorganische geschichtete Mineral (C) mit 8 bis 20 Massen-% im Feststoffmischungsverhältnis beinhaltet ist.

2. Das wasserbasierte Beschichtungsmittel für Tiefdruck nach Anspruch 1,
wobei das anorganische geschichtete Mineral (C) wasserquellbarer synthetischer Glimmer ist.

3. Gassperrfilm, umfassend:
eine Basisfilm, der aus einem Kunststoffmaterial gebildet ist; und
einen Gassperrbeschichtungsfilm, der auf einer Oberfläche des Basisfilms oder auf beiden Oberflächen des Basisfilms unter Verwendung des wasserbasierten Beschichtungsmittels für Tiefdruck nach Anspruch 1 oder 2 gebildet ist.

## Revendications

1. Agent de revêtement aqueux pour sérigraphie, comprenant :
une résine de polyuréthane aqueuse (A) qui contient une résine de polyuréthane ayant un groupe acide et un composé polyamine ;
un polymère soluble dans l'eau (B) ; et
un minéral lamellaire inorganique (C) à titre de composant constitutif principal ;
dans lequel les rapports de mélange des solides de la résine de polyuréthane aqueuse (A), du polymère soluble dans l'eau (B) et du minéral lamellaire inorganique (C) par rapport aux solides totaux sont situés dans les plages qui suivent, la concentration totale des solides est supérieure ou égale à 5 % en masse, et la viscosité à 23 °C est inférieure ou égale à 50 mPa.s,
le polymère soluble dans l'eau (B) est une résine de poly(alcool vinylique) ayant un degré de saponification supérieur ou égal à 95 % et un degré de polymérisation de 300 à 1 700,
la résine de polyuréthane aqueuse (A) est présente à raison de 5 à 60 % en masse ramenés au rapport de mélange des solides,
le polymère soluble dans l'eau (B) est présent à raison de 25 à 80 % en masse ramenés au rapport de mélange des solides, et
le minéral lamellaire inorganique (C) est présent à raison de 8 à 20 % en masse ramenés au rapport de mélange des solides.

2. Agent de revêtement aqueux pour sérigraphie selon la revendication 1, dans lequel le minéral lamellaire organique (C) est un mica synthétique gonflant dans l'eau.

3. Film formant barrière aux gaz comprenant :
un film de base formé d'une matière plastique ; et
un film de revêtement formant barrière aux gaz formé sur une surface du film de base ou sur les deux surfaces du film de base par utilisation de l'agent de revêtement aqueux pour sérigraphie selon la revendication 1 ou 2.
